(19) Europäisches Patentamt
European Patent Office
Office européen des brevets

(11) EP 2 373 743 B1

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(21) Anmeldenummer: **09763851.4**

(22) Anmeldetag: **21.11.2009**

(51) Int Cl.:
*C08L 69/00* (2006.01) *C08K 5/098* (2006.01)

(86) Internationale Anmeldenummer:
**PCT/EP2009/008299**

(87) Internationale Veröffentlichungsnummer:
**WO 2010/063381 (10.06.2010 Gazette 2010/23)**

# (54) SAURE PHOSPHORVERBINDUNGEN ENTHALTENDE SCHLAGZÄHMODIFIZIERTE POLYCARBONAT-ZUSAMMENSETZUNGEN MIT BASISCH GEFÄLLTEM EMULSIONSPFROPFPOLYMERSIAT

IMPACT-MODIFIED POLYCARBONATE COMPOSITIONS CONTAINING ACIDIC PHOSPHORUS COMPOUNDS AND COMPRISING BASICALLY PRECIPITATED EMULSION GRAFT POLYMER

COMPOSITIONS DE POLYCARBONATE MODIFIÉES À RÉSISTANCE ÉLEVÉE AU CHOC RENFERMANT DES COMPOSÉS DE PHOSPHORE ACIDES AVEC UN POLYMÉRISAT GREFFÉ PAR ÉMULSION PRÉCIPITÉ BASIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **04.12.2008 DE 102008060536**

(43) Veröffentlichungstag der Anmeldung:
**12.10.2011 Patentblatt 2011/41**

(73) Patentinhaber: **Bayer Intellectual Property GmbH**
**40789 Monheim (DE)**

(72) Erfinder:
- **SEIDEL, Andreas**
**41542 Dormagen (DE)**
- **AVTOMONOV, Evgeny**
**51375 Leverkusen (DE)**
- **ECKEL, Thomas**
**41540 Dormagen (DE)**

(74) Vertreter: **BIP Patents**
**Bayer Intellectual Property GmbH**
**Creative Campus Monheim**
**Alfred-Nobel-Straße 10**
**40789 Monheim am Rhein (DE)**

(56) Entgegenhaltungen:
**EP-A2- 0 900 827 WO-A1-03/027165**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 373 743 B1

## Beschreibung

Die Erfindung betrifft schlagzähmodifizierte Polycarbonatzusammensetzungen und Formmassen enthaltend basisch gefälltes Emulsionspfropfpolymerisat und saure Phosphorverbindungen, welche sich gegenüber dem Stand der Technik durch eine verbesserte Kombination aus Hydrolyse- und Thermostabilität auszeichnen, und welche sich zur Fertigung von spritzgegossenen Bauteilen eignen, die eine gute Tieftemperaturzähigkeit und - selbst bei kritischen Verarbeitungen (hohen Verarbeitungstemperaturen) - noch eine gute Spannungsrissbeständigkeit unter Chemikalieneinfluss ausweisen.

Emulsionspfropfpolymerisate, die in Polycarbonatzusammensetzungen des Standes der Technik als Schlagzähmodifikator eingesetzt werden, werden im Allgemeinen sauer aufgearbeitet, d.h. Dispersionen solcher Pfropfpolymerisate in destilliertem Wasser besitzen einen sauren pH-Wert. Dieses ist erforderlich, um eine ausreichende Thermostabilität der Polycarbonatzusammensetzungen zu gewährleisten, da basische Komponenten bekannterweise dazu neigen, das Polycarbonat unter Verarbeitungsbedingungen thermisch abzubauen. Oft werden solche Polycarbonatzusammensetzungen enthaltend sauer gefälltes Emulsionspfropfpolymerisat durch Zugabe saurer Thermostabilisatoren bei der Compoundierung zusätzlich stabilisiert. Solche Zusammensetzungen weisen in der Regel zwar eine gute Thermostabilität, jedoch im Allgemeinen eine mangelhafte Stabilität gegenüber hydrolytischer Spaltung des Polycarbonats unter dem Einfluss einer Wärme-Feucht-Alterung auf.

Die EP-A 900 827 offenbart schlagzähmodifzierte Polycarbonat-Zusammensetzungen mit verbesserter Thermostabilität enthaltend Emulsionspolymerisate, welche im wesentlichen frei von jeglichen basischen Komponenten sind, die das Polycarbonat abbauen. Gemäß dieser Anmeldung zeigen solche Polycarbonat-Zusammensetzungen, die mit Emulsionspolymerisaten schlagzähmodifiziert sind, die herstellungsbedingt basische Verunreinigungen enthalten, eine mangelhafte Thermostabilität.

Die EP-A 576 950 und WO-A 2007/065579 beschreiben basische Verunreinigungen enthaltende Zusammensetzungen enthaltend Polycarbonat und Acrylnitril-Butadien-Styrol-(ABS)-Polymere, die mit multifunktionellen organischen Carbonsäuren stabilisiert werden. Solche Zusammensetzungen weisen eine gute Thermostabilität im Hinblick auf die Integrität des Molekulargewichts der Polycarbonatkomponente bei hohen Verarbeitungstemperaturen auf, neigen jedoch im Spritzguss zur Ausbildung von Oberflächdefekten (Schlieren) auf den ihnen hergestellten Formteilen.

Aufgabe der vorliegenden Erfindung war es, mit Emulsionspfropfpolymerisaten schlagzähmodifzierte Polycarbonat-Zusammensetzungen bereitzustellen, welche sich durch eine verbesserte Kombination aus Hydrolyse- und Thermostabilität auszeichnen, und welche sich zur Fertigung von spritzgegossenen Bauteilen eignen, die eine gute Tieftemperaturzähigkeit und - selbst bei kritischen Verarbeitungen (hohen Verarbeitungstemperaturen) - noch durch eine gute Spannungsrissbeständigkeit unter Chemikalieneinfluss aufweisen.

Überraschend wurde nun gefunden, dass Zusammensetzungen und Formmassen enthaltend

A) aromatisches Polycarbonat oder aromatisches Polyestercarbonat oder Mischungen hieraus,
B) eine Mischung enthaltend

Ba) mindestens ein in Emulsionspolymerisation hergestelltes Pfropfpolymerisat und
Bb) mindestens ein Carboxylatsalz (d.h. das Salz einer Carbonsäure), vorzugsweise ein Salz einer Carbonsäure mit 10 bis 30 Kohlenstoffatomen, einer Harzsäure oder eines Harzsäurederivats, besonders bevorzugt ein Salz einer Harzsäure oder eines Harzsäurederivats,

wobei diese Mischung als 10 Gew.-%ige Suspension in destilliertem Wasser aufgeschlämmt einen pH-Wert von >7, bevorzugt von 7,5 bis 10, insbesondere von 7,5 bis 9 aufweist,
C) mindestens eine saure Phosphorverbindung mit mindestens einer P-OH-Funktionalität,
D) gegebenenfalls ein Polymer ausgewählt aus der Gruppe der kautschukfreien Vinyl(co)-polymere, Polyester oder kautschukmodifizierten Vinyl(co)polymere hergestellt in Masse-, Lösungs- oder Suspensionspolymersiation, und
E) gegebenenfalls Polymeradditive,

die vorstehend genannten Aufgaben erfüllen.

In bevorzugter Ausführungsform enthalten die erfindungsgemäßen Zusammensetzungen bzw. Formmassen

A) 10 bis 99,5 Gew.-Teile, besonders bevorzugt 30 bis 80 Gew.-Teile, insbesondere 40 bis 75 Gew.-Teile (bezogen auf die Summe der Komponenten A + B+ D) aromatisches Polycarbonat oder aromatisches Polyestercarbonat oder Mischungen hieraus,
B) 0,5 bis 60 Gew.-Teile, besonders bevorzugt 1 bis 50 Gew.-Teile, insbesondere 3 bis 30 Gew.-Teile (bezogen auf die Summe der Komponenten A + B+ D) einer Mischung enthaltend

Ba) mindestens ein in Emulsionspolymerisation hergestelltes Pfropfpolymerisat und

Bb) mindestens ein Carboxylatsalz, vorzugsweise ein Salz einer Carbonsäure mit 10 bis 30 Kohlenstoffatomen, einer Harzsäure oder eines Harzsäurederivats, besonders bevorzugt ein Salz einer Harzsäure oder eines Harzsäurederivats,

wobei diese Mischung als 10 Gew.-%ige Suspension in destilliertem Wasser aufgeschlämmt einen pH-Wert von >7, bevorzugt von 7,5 bis 10, insbesondere von 7,5 bis 9 aufweist,

C) 0,001 bis 1 Gew.-Teile, besonders bevorzugt 0,002 bis 0,5 Gew.-Teile, insbesondere 0,005 bis 0,3 Gew.-Teile (bezogen auf die Summe der Komponenten A + B+ D) mindestens einer sauren Phosphorverbindung mit mindestens einer P-OH-Funktionalität,

D) 0 bis 60 Gew.-Teile, besonders bevorzugt 0,5 bis 40 Gew.-Teile, insbesondere 5 bis 40 Gew.-Teile (bezogen auf die Summe der Komponenten A + B+ D) eines Polymers ausgewählt aus der Gruppe der Vinyl(co)polymere, Polyester und kautschukmodifizierten Vinyl(co)polymere verschieden von Komponente B, bevorzugt hergestellt in Masse-, Lösungs- oder Suspensionspolymersiation, und

E) 0 bis 40 Gew.-Teile, besonders bevorzugt 0,1 bis 30 Gew.-Teile, insbesondere 0,5 bis 20 Gew.-Teile (bezogen auf die Summe der Komponenten A + B+ D) Polymeradditive,

wobei alle Gewichtsteilangaben in der vorliegenden Anmeldung so normiert sind, dass die Summe der Gewichtsteile der Komponenten A+B+D in der Zusammensetzung 100 ergeben, und

wobei die Komponenten B und C im Verhältnis 30:1 bis 2000:1, bevorzugt im Verhältnis 50:1 bis 1500:1, besonders bevorzugt im Verhältnis 70:1 bis 1000:1, insbesondere im Verhältnis 80:1 bis 800:1 zum Einsatz kommen.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

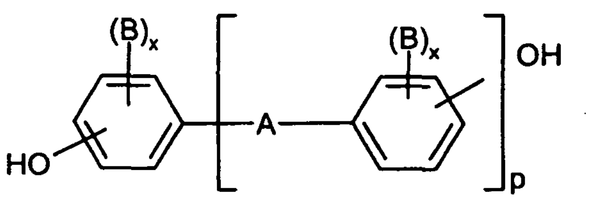

(I),

wobei

A eine Einfachbindung, $C_1$ bis $C_5$-Alkylen, $C_2$ bis $C_5$-Alkyliden, $C_5$ bis $C_6$-Cycloalkyliden, - O-, -SO-, -CO-, -S-, $-SO_2-$, $C_6$ bis $C_{12}$ -Arylen, an das weitere aromatische gegebenenfalls Heteroatome enthaltende Ringe kondensiert sein können, oder ein Rest der Formel (II) oder (III)

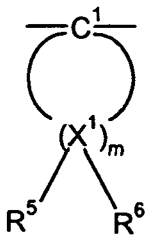

(II)

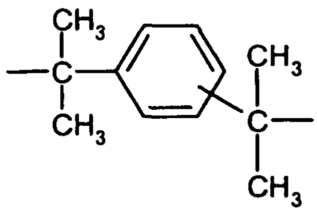

(III)

| | |
|---|---|
| B | jeweils $C_1$ bis $C_{12}$-Alkyl, vorzugsweise Methyl, Halogen, vorzugsweise Chlor und/oder Brom |
| x | jeweils unabhängig voneinander 0, 1 oder 2, |
| p | 1 oder 0 sind, und |
| $R^5$ und $R^6$ | für jedes $X^1$ individuell wählbar, unabhängig voneinander Wasserstoff oder $C_1$ bis $C_6$-Alkyl, vorzugsweise Wasserstoff, Methyl oder Ethyl, |
| $X^1$ | Kohlenstoff und |
| m | eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind. |

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).
Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol-%mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders

bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis-(4-hydroxy-phenyl)-cyclohexyl]-propan, 2,4-Bis-(4-hydroxyphenyl-isopropyl)-phenol, Tetra-(4-hydroxyphenyl)-methan, 2,6-Bis-(2-hydroxy-5'-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis-[4',4"-dihydroxytriphenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

<u>**Komponente B**</u>

Komponente B enthält

Ba) mindestens ein in Emulsionspolymerisation hergestelltes Pfropfpolymerisat und
Bb) mindestens ein Carboxylatsalz, vorzugsweise ein Salz einer Carbonsäure mit 10 bis 30 Kohlenstoffatomen, einer Harzsäure oder eines Harzsäurederivats, besonders bevorzugt ein Salz einer Harzsäure oder eines Harzsäurederivats,

und weist als 10 Gew.-%ige Suspension in destilliertem Wasser aufgeschlämmt einen pH-Wert von >7, bevorzugt von 7,5 bis 10, insbesondere von 7,5 bis 9 auf.

Die Komponente B enthält vorzugsweise

Ba) 99,95 bis 95 Gew.-Teile, bevorzugt von 99,7 bis 96 Gew.-Teile, besonders bevorzugt 99,5 bis 97 Gew.-Teile, bezogen auf die Summe der Komponenten Ba) und Bb), ein oder mehrere Pfropfpolymerisate von

Ba.1 10 bis 90 Gew.-%, vorzugsweise 20 bis 70 Gew.-%, insbesondere 25 bis 50 Gew.-%, bezogen auf die

Summe der Komponenten Ba.1 und Ba.2, wenigstens eines Vinylmonomeren auf

Ba.2 10 bis 90 Gew.-%, vorzugsweise 30 bis 80 Gew.-%, insbesondere 50 bis 75 Gew.-%, bezogen auf die Summe der Komponenten Ba.1 und Ba.2, einer oder mehrerer Pfropfgrundlagen mit Glasübergangstemperaturen < 10°C, vorzugsweise < 0°C, besonders bevorzugt < -20°C, und

Bb) 0,05 bis 5 Gew.-Teile, bevorzugt von 0,3 bis 4 Gew.-Teile, besonders bevorzugt 0,5 bis 3 Gew.-Teile, bezogen auf die Summe der Komponenten Ba) und Bb), Carboxylatsalz, vorzugsweise ein Salz einer Carbonsäure mit 10 bis 30 Kohlenstoffatomen, einer Harzsäure oder eines Harzsäurederivats, besonders bevorzugt ein Salz einer Harzsäure oder eines Harzsäurederivats.

Die Pfropfgrundlage Ba.2 hat im allgemeinen eine mittlere Teilchengröße ($d_{50}$-Wert) von 0,05 bis 2 $\mu$m, vorzugsweise 0,1 bis 1 $\mu$m, besonders bevorzugt 0,2 bis 0,5 $\mu$m.

Monomere Ba.1 sind vorzugsweise Gemische aus

Ba.1.1 50 bis 99 Gew.-Teilen Vinylaromaten und/oder kemsubstituierten Vinylaromaten (wie Styrol, $\alpha$-Methylstyrol, p-Methylstyrol, p-Chlorstyrol) und/oder Methacrylsäure-($C_1$-$C_8$)-Alkylester, wie Methylmethacrylat, Ethylmethacrylat, und

Ba.1.2 bis 50 Gew.-Teilen Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere Ba.1.1 sind ausgewählt aus mindestens einem der Monomere Styrol, $\alpha$-Methylstyrol und Methylmethacrylat, bevorzugte Monomere Ba.1.2 sind ausgewählt aus mindestens einem der Monomere Acrylnitril, Maleinsäureanhydrid und Methylmethacrylat. Besonders bevorzugte Monomere sind Ba.1.1 Styrol und Ba.1.2 Acrylnitril.

Für die Pfropfpolymerisate Ba) geeignete Pfropfgrundlagen Ba.2 sind beispielsweise Dienkautschuke, EP(D) M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen Ba.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß Ba.1.1 und Ba.1.2), mit der Maßgabe, dass die Glasübergangstemperatur der Komponente Ba.2 unterhalb < 10°C, vorzugsweise < 0°C, besonders bevorzugt < -20°C liegt. Besonders bevorzugt ist reiner Polybutadienkautschuk.

Besonders bevorzugte Polymerisate Ba) sind beispielsweise ABS- und MBS-Polymerisate.

Geeignete Acrylatkautschuke gemäß Ba.2 sind vorzugsweise Polymerisate aus Acrylsäurealkylestern, gegebenenfalls mit bis zu 40 Gew.-%, bezogen auf Ba.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage Ba.2. Bei cyclischen vernetzenden Monomeren mit mindestens drei ethylenisch ungesättigten Gruppen ist es vorteilhaft, die Menge auf unter 1 Gew.-% der Pfropfgrundlage Ba.2 zu beschränken.

Bevorzugte "andere" polymerisierbare, ethylenisch ungesättigte Monomere, die neben den Acrylsäureestern gegebenenfalls zur Herstellung der Pfropfgrundlage Ba.2 dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage Ba.2 sind Emulsionspolymerisate, die einen Gelgehalt von mindestens 60 Gew.-% aufweisen.

Weitere geeignete Pfropfgrundlagen gemäß Ba.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Die partikuläre Pfropfgrundlage ist teilweise oder vollständig vernetzt. Der Anteil der vernetzten Pfropfgrundlage

ist durch den Gelgehalt in einem geeigneten Lösungsmittel charakterisiert.

Der Gelgehalt der Pfropfgrundlage Ba.2 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Der Gelanteil der Pfropfgrundlage Ba.2 beträgt mindestens 30 Gew.-%, vorzugsweise mindestens 40 Gew.-%, besonders bevorzugt mindestens 70 Gew.-% (in Toluol gemessen).

Die Teilchengröße der Pfropfgrundlagenpartikel kann durch Direktwachstum oder durch Agglomeration eines Kautschuklatex mit kleinerer mittlerer Partikelgröße eingestellt werden.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Bevorzugt sind Pfropfpolymerisate Ba) mit Kern-Schale-Aufbau.

Komponente B kann hergestellt werden,

a) indem ein in Emulsionspolymerisation hergestelltes Pfropfpolymerisat Ba) mit Carboxylatsalz Bb) physikalisch vermischt wird, oder

b) indem ein Pfropfpolymerisat Ba) in Emulsionspolymersation hergestellt wird, wobei in mindestens einem Verfahrensschritt der Herstellung des Pfropfpolymerisats ein Carboxylatsalz Bb) als Emulgator eingesetzt wird und herstellungsbedingt im Pfropfpolymerisat verbleibt oder nur partiell aus dem Pfropfpolymerisat entfernt wird.

In bevorzugter Ausführungsform ist Komponente B ein in Emulsionspolymerisation hergestelltes Pfropfpolymerisat, bei dessen Herstellung ein Carboxylatsalz als Emulgator eingesetzt wird. Gemäß dieser Ausführungsform ist Komponente B erhältlich nach einem Verfahren,

(i) wobei in einem ersten Verfahrensschritt eine Pfropfgrundlage Ba.2 hergestellt wird,

(ii) diese in einem zweiten Verfahrensschritt in Emulsionspolymerisation mit wenigstens einem Vinylmonomeren Ba.1 in einer Pfropfreaktion umgesetzt wird, wobei die Pfropfreaktion bei einem pH-Wert von >7, bevorzugt >8, insbesondere in einem pH-Bereich von 8 bis 13 durchgeführt wird, wobei gegebenenfalls Additive wie beispielsweise Stabilisatoren und Antioxidantien, bevorzugt als wässrige Emulsion oder Dispersion zugegeben werden,

(iii) wobei in mindestens einem der Verfahrensschritte (i) bis (ii) ein Carboxylatsalz Bb) als Emulgator eingesetzt wird, gegebenenfalls in Kombination mit weiteren, von Carboxylatsalzen Bb) verschiedenen oberflächenaktiven Substanzen,

(iv) wobei die Fällung des Pfropfpolymerlatex entweder im basischen Milieu, d.h. bei einem pH-Wert >7, oder aber unter solchen, gegebenenfalls auch leicht sauren Bedingungen durchgeführt wird, die zu keiner vollständigen Neutralisation bereits vorhandener basischer Komponenten führen, und

(v) wobei das als Emulgator eingesetzte Carboxylatsalz bei der anschließenden Aufarbeitung des Pfropfpolymerlatex im Pfropfpolymerisat verbleibt oder aber nur partiell aus dem Pfropfpolymerisat entfernt wird..

Das Carboxylatsalz Bb) gemäß (iv) kann bei der Herstellung der Komponente B in dieser bevorzugten Ausführungsform bei der Herstellung der Pfropfgrundlage Ba.2 (d.h. in Schritt (i)), bei der Pfropfreaktion (d.h. in Schritt (ii)), bei der etwaigen Zugabe von Additiven in Form von wässrigen Emulsionen oder Dispersionen (d.h. in Schritt (iii)) oder aber jeweils zum Teil bei der Herstellung der Pfropfgrundlage, der Pfropfreaktion oder bei der Zugabe von Additiven in Form von wässrigen Emulsionen oder Dispersionen eingesetzt werden. Dabei wird in den Reaktionsschritten (i) bis (iii) in Summe das Carboxyalsalz Bb) vorzugsweise in einer Konzentration von 0,1 bis 5 Gew.-Teilen, besonders bevorzugt von 0,3 bis 4 Gew.-Teilen, insbesondere von 0,5 bis 3 Gew.-Teilen, jeweils bezogen auf die Masse der herzustellenden Komponente B eingesetzt.

Bei der Pfropfreaktion werden die Pfropfmonomeren bekanntlich nicht unbedingt vollständig auf die Pfropfgrundlage aufgepfropft. Unter Pfropfpolymer gemäß Komponente Ba wird somit das Produkt verstanden, welches gemäß dem zuvor beschriebenen Verfahren entsteht und somit auch durch (Co)Polymerisation der Pfropfmonomere in Gegenwart der Pfropfgrundlage entstandenes freies, das heißt nicht chemisch an den Kautschuk gebundenes (Co)Polymerisat enthalten kann.

Bevorzugt werden als Emulgatoren Carboxylatsalze Bb), einzeln oder in Kombination miteinander, verwendet, beispielsweise und bevorzugt Metallsalze von Carbonsäuren mit 10 bis 30 Kohlenstoffatomen (beispielsweise Fettsäuren mit 10 bis 30 Kohlenstoffatomen), oder Harzsäuren bzw. Harzsäurederivate. Vorzugsweise handelt es sich bei den Metallsalzen um die Alkalimetallsalze und Erdalkalimetallsalze, insbesondere um die Natrium- und Kalium-Salze (Na- und K-Salze). Besonders bevorzugt werden als Emulgatoren die Alkalimetallsalze, insbesondere die Na- und K-Salze von Harzssäuren bzw. von Harzsäurederivaten eingesetzt. Einige, aber nicht erschöpfende Beispiele solcher Harzseifen sind z.B. Natrium oder Kaliumsalze der dipsorportionierten Dehydroabietinsäure, die u.a. als Resin® 731D, Resin® 835A

der Fa. Abieta GmbH (Gersthofen), Gresinox® 578M der Fa. Granel S.A. (Frankreich) vermarktet werden.

Die Carboxylatsalze Bb) können auch in Kombination mit weiteren oberflächenaktiven Substanzen, beispielsweise in Kombination mit organischen Sulfaten, Sulfonaten oder Phosphaten, aber auch in Kombination mit neutralen Emulgatoren bei der Synthese der Pfropfgrundlage Ba.2 und/oder bei der Pfropfreaktion und/oder bei der etwaigen Zugabe von Additiven eingesetzt werden.

Die Reaktionsdurchführung bei der Herstellung der Komponente B mit Hilfe der carboxylathaltigen Emulgatoren (d.h. Carboxylat Salze Bb)) erfordert basisches Milieu bei pH-Werten > 7. Bevorzugt wird bei einem pH-Wert im Bereich von 8 bis 13 gearbeitet. Die Aufrechterhaltung des basischen Niveaus wird in der Regel durch Einsatz von Laugen, z.B. NaOH, KOH, Aminen oder Puffersystemen wie z.B. $NH_3/NH_4Cl$ oder $NaHCO_3/Na_2CO_3$ sichergestellt.

Die Pfropfcopolymerisate Ba) werden durch radikalische Polymerisation hergestellt.

Zum Starten der Polymerisationreaktion sind alle Radikalbildner geeignet, die bei der gewählten Reaktionstemperatur, die zwischen 30-95°C, bevorzugt zwischen 60-85°C liegt, zerfallen, also sowohl solche, die allein thermisch zerfallen, als auch solche, die dies in Gegenwart eines RedoxSystems tun. Als Polymerisationsinitiatoren kommen vorzugsweise Radikalbildner, beispielsweise Peroxide wie bevorzugt Peroxosulfate (etwa Natrium- oder Kaliumpersulfat) und Azoverbindungen wie Azodiisobutyronitril in Betracht. Es können jedoch auch Redox-Systeme, insbesondere solche auf Basis von Hydroperoxiden wie tert.-Butylhydroperoxid, Cumolhydroperoxid, eingesetzt werden.

Besonders geeignete Pfropfkautschuke sind solche Polymerisate, die durch Redox-Initiierung mit einem Initiatorsystem aus organischem Hydroperoxid und Ascorbinsäure gemäß US-P 4 937 285 hergestellt werden.

Eine wesentliche Rolle bei der Herstellung der Komponente B spielt die Aufarbeitung der fertig polymerisierten Pfropfpolymer-Dispersion, wobei diese entweder im basischen Milieu oder aber zumindest unter nicht vollständiger Neutralisation der basischen Bestandteile im Latex der Komponente B erfolgt

Beispiele für geeignete Aufarbeitungsverfahren sind z.B. die Ausfällung der Pfropfpolymerisat-Dispersion durch Einwirkung von wässrigen Elektrolytlösungen wie z.B. Lösungen von Salzen (z.B. Magnesiumsulfat, Calciumchlorid, Natriumchlorid), Lösungen von Säuren (z.B. Schwefelsäure, Salzsäure, Phosphorsäure, Essigsäure) oder deren Mischungen, Ausfällung durch Einwirkung von Kälte (Gefrierkoagulation) oder direkte Gewinnung des Fällproduktes aus der Dispersion (dem Latex) durch Sprühtrocknung. Die Ausfällung der Pfropfpolymerisat-Dispersion erfolgt in bevorzugter Ausführungsform durch Zugabe eines neutralen Salzes (z.B. Magnesiumsulfat, Calciumchlorid, Natriumchlorid).

Dabei ist es für die Aufarbeitung der Komponente B der erfindungsgemäßen Zusammensetzungen wesentlich, dass keine vollständige Neutralisation der basischen Komponenten stattfindet, so dass die gewonnene, trockene Komponente B, wenn diese in destilliertem Wasser aufgeschlämmt wird (als 10 Gew.-%ige Suspension) einen pH-Wert von >7, bevorzugt 7,5 bis 10, insbesondere 7,5 bis 9 aufweist.

In einem alternativen Aufarbeitungsverfahren wird nach der Ausfällung das feuchte Pfropfpolymerisat (Komponente B) mit einer Thermoplastharz-Schmelze (Komponente D) in einem Knetreaktor abgemischt. Einzelheiten dieses Aufarbeitungsverfahrens sind in der EP-A 867 463 beschrieben. Die nach diesem Aufarbeitungsverfahren erhaltenen Zusammensetzungen aus Pfropfpolymerisat und Thermoplastharz gemäß Komponente D können zur Herstellung der erfindungsgemäßen Formmassen eingesetzt werden.

## Komponente C

Als Komponente C kommt mindestens eine Brönstedt-saure Phosphorverbindung, also eine Verbindung mit mindestens einer P-OH-Funktionalität zum Einsatz.

In bevorzugter Ausführungsform handelt es sich um eine solche Brönstedt-saure Phosphorverbindung, in der der Phosphor die Oxidationsstufe +3 oder +5 besitzt.

Als solche Brönstedt-saure Phosphorverbindungen eignen sich sowohl anorganische Verbindungen (wie beispielsweise und bevorzugt ortho-Phosphorsäure, meta-Phosphorsäure, Oligophosphorsäure und phosphorige Säure), wie auch organische Phosphorverbindungen, die mindestens eine P-OH Funktionalität aufweisen. Diese organischen Phosphorverbindungen sind Halbester oder Teilester der ortho-Phosphorsäure, meta-Phosphorsäure, Oligophosphorsäure oder der phosphorigen Säure mit Alkoholen jeder Art, wobei die Halbester oder Teilester mindestens eine P-OH-Funktionalität aufweisen. Beispielsweise handelt es sich bei Komponente C um Verbindungen ausgewählt aus mindestens einer der Gruppe bestehend aus $P(O)(OH)_3$, $P(O)(OH)(OR^7)(OR^8)$, $P(O)(OH)R^7(OR^8)$, $P(O)(OH)R^7R^8$, $P(O)(OH)_2(OR^7)$, $P(O)(OH)_2R^7$, $P(OH)_3$, $P(OH)(OR^7)(OR^8)$, $P(OH)(OR^7)R^8$, $P(OH)R^7R^8$, $P(OH)_2(OR^7)$, $P(OH)_2R^7$ sowie Kondensationsprodukte artgleicher oder artverschiedener dieser zuvor genannten Verbindungen, wobei $R^7$ und $R^8$ für beliebige gleiche oder verschiedene organische Reste stehen, beispielsweise für einen gegebenenfalls substituierten Alkyl-, Aryl- oder Alkylarylrest. Dabei können die Reste $R^7$ und $R^8$ auch zu einem zyklischen Rest verbunden sein.

In einer besonders bevorzugten Ausführungsform der vorliegenden Erfindungen kommen als Komponente C Verbindungen gemäß Formel (IV) zum Einsatz,

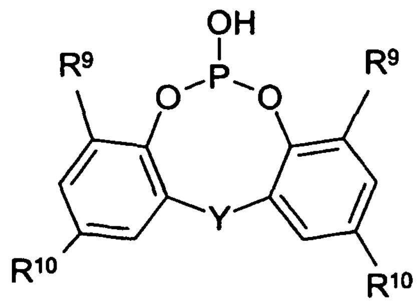

(IV)

worin

| | |
|---|---|
| $R^9$ und $R^{10}$ | unabhängig voneinander $C_1$ bis $C_9$-Alkyl, gegebenenfalls substituiertes $C_5$ bis $C_6$-Cycloalkyl, $C_6$ bis $C_{10}$-Aryl oder $C_7$ bis $C_{12}$-Aralkyl, und |
| Y | S oder $CZ^1Z^2$, wobei $Z^1$ und $Z^2$ unabhängig voneinander für H, $C_1$ bis $C_6$-Alkyl, Cyclohexenyl oder Cyclohexyl stehen, |

bedeuten.

Verbindungen gemäß Formel (IV) sind bekannt und beispielsweise in EP-A 0 023 291 offenbart.

Höchst bevorzugt sind als Komponente C Phosphorigsäureester des Bis-(2-hydroxy-3-cyclohexyl-5-methyl-phenyl)-sulfids (Formel IVa),

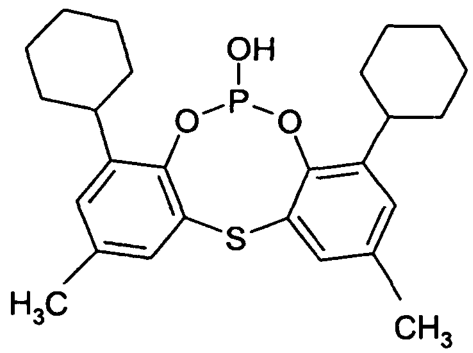

(IVa)

Phosphorigsäureester des Bis-(2-hydroxy-3-cyclohexyl-5-methyl-phenyl)-methans (Formel IVb),

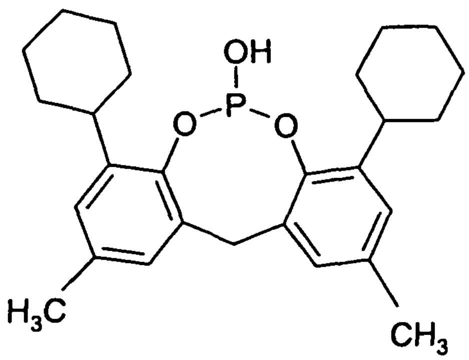

(IVb)

Phosphorigsäureester des Bis-(2-hydroxy-3-benzyl-5-methyl-phenyl)-sulfids (Formel (IVc),

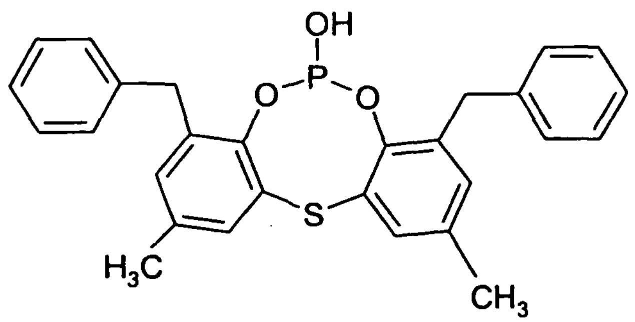

(IVc)

und Phosphorigsäureester des Bis-(2-hydroxy-3-benzyl-5-methyl-phenyl)-methans (Formel IVd).

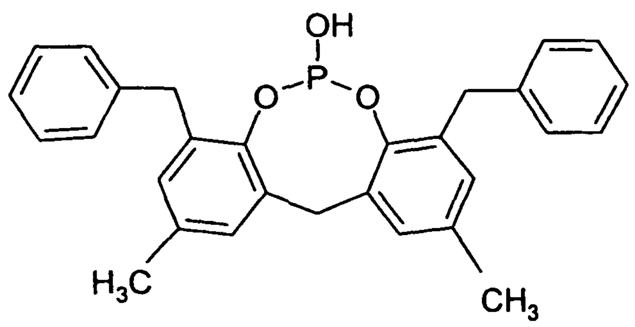

(IVd)

In einer weiteren bevorzugten Ausführungsformen der vorliegenden Erfindung handelt es sich bei der Komponente C um Verbindungen der Strukturen (V) oder (VI)

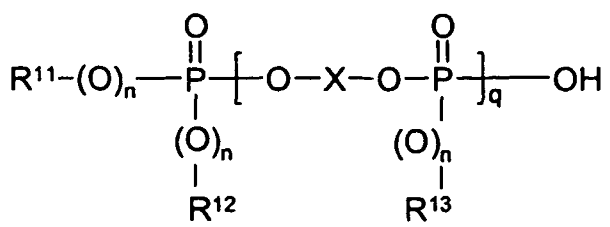

(V)

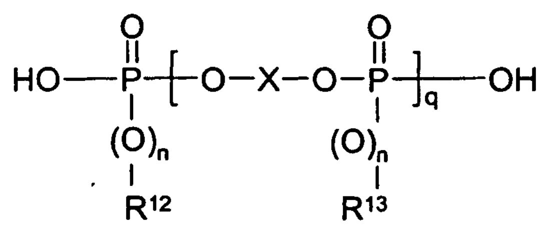

(VI)

worin

| | |
|---|---|
| $R^{11}$, $R^{12}$ und $R^{13}$ | unabhängig voneinander jeweils gegebenenfalls halogeniertes $C_1$ bis $C_8$-Alkyl, jeweils gegebenenfalls durch Alkyl, vorzugsweise $C_1$ bis $C_4$-Alkyl, und/oder Halogen, vorzugsweise Chlor, Brom, substituiertes $C_5$ bis $C_6$-Cycloalkyl, $C_6$ bis $C_{20}$-Aryl oder $C_7$ bis $C_{12}$-Aralkyl, |
| n | unabhängig voneinander 0 oder 1, |
| q | 0 bis 30 und |
| X | einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten. |

Bevorzugt stehen $R^{11}$, $R^{12}$, und $R^{13}$ unabhängig voneinander für $C_1$ bis $C_4$-Alkyl, Phenyl, Naphthyl oder Phenyl-$C_1$-$C_4$-alkyl. Die aromatischen Gruppen $R^{11}$, $R^{12}$ und $R^{13}$ können ihrerseits mit Halogen- und/oder Alkylgruppen, vorzugsweise Chlor, Brom und/oder $C_1$ bis $C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (V) oder (VI) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (V) oder (VI) kann, unabhängig voneinander, 0 oder 1 sein, vorzugsweise ist n gleich 1.

q steht für Werte von 0 bis 30, bevorzugt 0,3 bis 20, besonders bevorzugt 0,5 bis 10, insbesondere 0,5 bis 6, ganz besonders bevorzugt 1,1 bis 1,6.

X in der Formel (V) oder (VI) steht besonders bevorzugt für

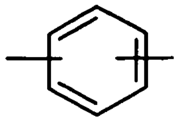 , 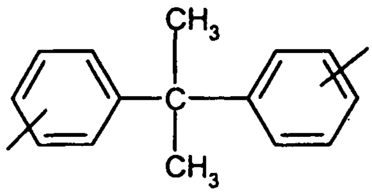 , 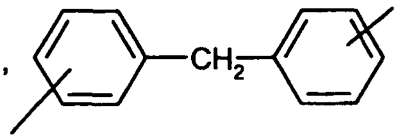 ,

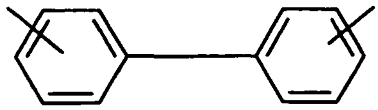 , 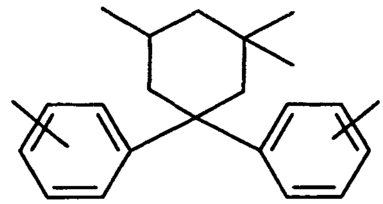

oder deren chlorierte oder bromierte Derivate, insbesondere leitet sich X von Resorcin, Hydrochinon, Bisphenol A oder Diphenylphenol ab. Höchst bevorzugt leitet sich X von Bisphenol A ab.

Höchst bevorzugt als Komponente C ist eine Verbindung gemäß Formel (Va),

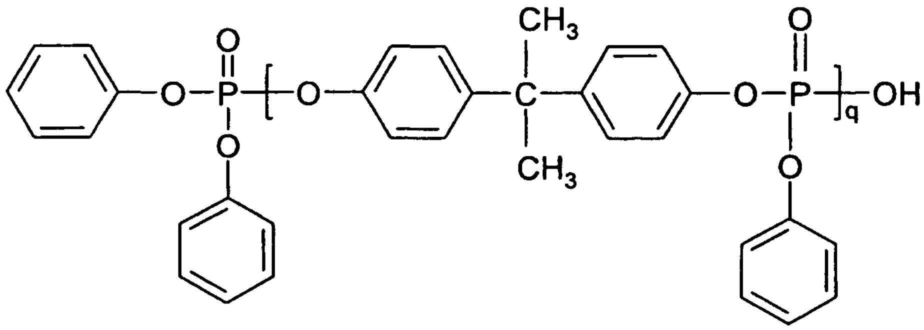

(Va)

wobei q in Formel (Va) für Werte von 0 bis 30, bevorzugt 0,3 bis 20, besonders bevorzugt 0,5 bis 10, insbesondere 0,5 bis 6, ganz besonders bevorzugt 1,1 bis 1,6 steht.

Als erfindungsgemäße Komponente C können auch Mischungen verschiedener phosphorsaurer Verbindungen zum Einsatz kommen.

## <u>Komponente D</u>

Als Komponente D kommen Polymere ausgewählt aus mindestens einem Vertreter der Gruppe der in Masse-, Lösungs- oder Suspensions-Polymerisation hergestellten Pfropfpolymerisate D.1, der kautschukfreien (Co)Polymerisate D.2 und der Polyester D.3 in Frage.

Die Komponente D.1 umfasst in Masse-, Lösungs- oder Suspensions-Polymerisation hergestellte Pfropfpolymerisate von

D.1.1 50 bis 95, vorzugsweise 70 bis 92, insbesondere 75 bis 90 Gew.-%, bezogen auf die Komponente D.1, wenigstens eines Vinylmonomeren auf

D.1.2 5 bis 50, vorzugsweise 8 bis 30, insbesondere 10 bis 25 Gew.-%, bezogen auf die Komponente D1, einer oder mehrerer Pfropfgrundlagen mit Glasübergangstemperaturen < 10°C, vorzugsweise < 0°C, besonders bevorzugt < -20°C.

Die Pfropfgrundlage D.1.2 hat im allgemeinen eine mittlere Teilchengröße ($d_{50}$-Wert) von 0,1 bis 10 μm, vorzugsweise 0,3 bis 5 μm, besonders bevorzugt 0,5 bis 2,0 μm.

Monomere D.1.1 sind vorzugsweise Gemische aus

D.1.1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder Methacrylsäure-($C_1$-$C_8$)-Alkylester, wie Methylmethacrylat, Ethylmethacrylat), und

D.1.1.2 1 bis 50 Gew.-Teilen Vinylcyanide (ungesättigte Nitrile wie Acrylnitril und Methacrylnitril) und/oder (Meth) Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere D.1.1.1 sind ausgewählt aus mindestens einem der Monomere Styrol, α-Methylstyrol und Methylmethacrylat, bevorzugte Monomere D.1.1.2 sind ausgewählt aus mindestens einem der Monomere Acrylnitril, Maleinsäureanhydrid und Methylmethacrylat. Besonders bevorzugte Monomere sind D.1.1.1 Styrol und D.1.1.2 Acrylnitril.

Für die Pfropfpolymerisate D.1 geeignete Pfropfgrundlagen D.1.2 sind beispielsweise Dienkautschuke, EP(D) M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen D.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß D.1.1.1 und D.1.1.2), mit der Maßgabe, dass die Glasübergangstemperatur der Komponente B.2 unterhalb < 10°C, vorzugsweise < 0°C, besonders bevorzugt < -20°C liegt. Besonders bevorzugt ist reiner Polybutadienkautschuk.

Besonders bevorzugte Polymerisate D.1 sind beispielsweise ABS-Polymerisate.

Die Pfropfcopolymerisate D.1 werden durch radikalische Polymerisation hergestellt.

Der Gelanteil der Pfropfpolymerisaten D.1 beträgt bevorzugt 10 bis 50 Gew.-%, insbesondere 15 bis 40 Gew.-% (in Aceton gemessen).

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten D.1 auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Das gewichtsgemittelte Molekulargewicht $M_w$ des freien, d.h. nicht an den Kautschuk gebundenen (Co)Polymerisats im Pfropfpolymerisat D.1 beträgt bevorzugt 50.000 bis 250.000 g/mol, insbesondere 60.000 bis 200.000 g/mol, besonders bevorzugt 70.000 bis 130.000 g/mol.

Bei den kautschukfreien Vinyl(Co)Polymerisaten D.2 handelt es sich um kautschukfreie Homo- und/oder Copolymerisate von mindestens einem Monomeren aus der Gruppe der Vinylaromaten, Vinylcyanide (ungesättigte Nitrile), (Meth)Acrylsäure-($C_1$ bis $C_8$)-Alkylester, ungesättigten Carbonsäuren sowie Derivaten (wie Anhydride und Imide) ungesättigter Carbonsäuren.

Insbesondere geeignet sind (Co)Polymerisate D.2 aus

D.2.1 50 bis 99 Gew.-%, bezogen auf das (Co)Polymerisat D.2, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-($C_1$-$C_8$)-Alkylester (wie beispielsweise Methylmethacrylat, n-Butylacrylat, tert.-Butylacrylat) und

D.2.2 1 bis 50 Gew.-%, bezogen auf das (Co)Polymerisat D.2, mindestens eines Monomeren ausgewählt aus der Gruppe der Vinylcyanide (wie beispielsweise ungesättigte Nitrile wie Acrylnitril und Methacrylnitril), (Meth) Acrylsäure-($C_1$-$C_8$)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate D.2 sind harzartig, thermoplastisch und kautschukfrei. Besonders bevorzugt ist das

Copolymerisat aus Styrol und Acrylnitril.

Derartige (Co)Polymerisate D.2 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte $M_w$ (Gewichtsmittel, ermittelt durch GPC, Lichtstreuung oder Sedimentation) zwischen 50.000 und 250.000, insbesondere 60.000 bis 180.000 g/mol, besonders bevorzugt 70.000 bis 150.000 g/mol.

Die Polyalkylenterephthalate der Komponente D.3 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

## Komponente E

Die erfindungemäßen Zusammensetzungen können als Komponente E weitere Zusätze enthalten.

Als weitere Zusätze gemäß Komponente E kommen handelsübliche Polymeradditive ausgewählt aus der Gruppe enthaltend Flammschutzmittel (beispielsweise Phosphor- oder Halogenverbindungen), Flammschutzsynergisten (beispielsweise nanoskalige Metalloxide), rauchhemmende Additive (beispielsweise Borsäure oder Zinkborat), Antidrippingmittel (beispielsweise Verbindungen der Substanzklassen der fluorierten Polyolefine, der Silikone oder Aramidfasern), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder Keramik(hohl)kugeln), IR-Absorbentien, optische Aufheller, fluoreszierende Additive, von Komponente B verschiedene Schlagzähmodifikatoren, plättchen-, schuppen- oder faserförmige Füll- und Verstärkungsstoffe (beispielsweise Wollastonite, Glas- oder Karbonfasem, Glimmer, Montmorrelonite, Tonschichtminerale, Phyllosilicate, Kaolin, Talk und Glasschuppen) sowie Farbstoffe und Pigmente in Frage.

Als Flammschutzmittel gemäß Komponente E werden bevorzugt phosphorhaltige Verbindungen eingesetzt. Diese sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell

erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (VII)

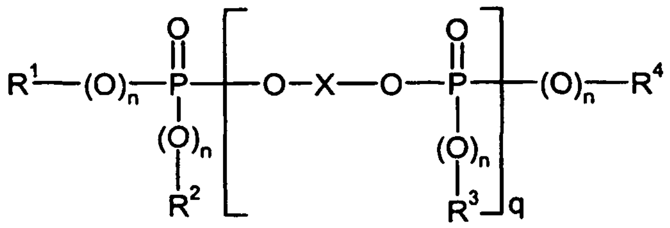

(VII)

worin

| | |
|---|---|
| $R^1$, $R^2$, $R^3$ und $R^4$, | unabhängig voneinander jeweils gegebenenfalls halogeniertes C bis $C_8$-Alkyl, jeweils gegebenenfalls durch Alkyl, vorzugsweise $C_1$ bis $C_4$-Alkyl, und/oder Halogen, vorzugsweise Chlor, Brom, substituiertes $C_5$ bis $C_6$-Cycloalkyl, $C_6$ bis $C_{20}$-Aryl oder $C_7$ bis $C_{12}$-Aralkyl, |
| n | unabhängig voneinander, 0 oder 1, |
| q | 0 bis 30 und |
| X | einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten. |

Bevorzugt stehen $R^1$, $R^2$, $R^3$ und $R^4$ unabhängig voneinander für $C_1$ bis $C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$ bis $C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

- X in der Formel (VII) bedeutet bevorzugt einen ein- oder mehrkernigen aromatischen Rest mit 6 bis 30 C-Atomen. Dieser leitet sich bevorzugt von Diphenolen der Formel (I) ab.
- n in der Formel (VII) kann, unabhängig voneinander, 0 oder 1 sein, vorzugsweise ist n gleich 1.
- q steht für Werte von 0 bis 30, bevorzugt 0,3 bis 20, besonders bevorzugt 0,5 bis 10, insbesondere 0,5 bis 6, ganz besonders bevorzugt 1,1 bis 1,6.
- X steht besonders bevorzugt für

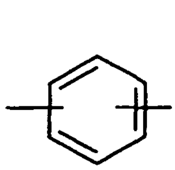
,
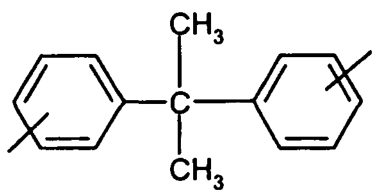
,
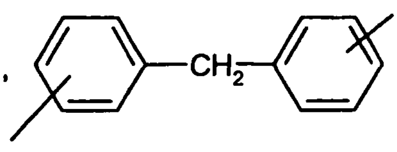
,

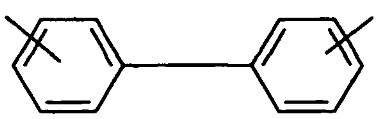
,
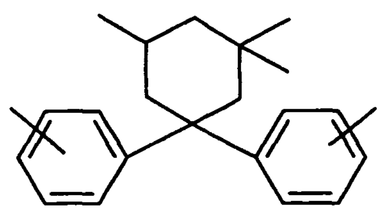

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente E können auch Mischungen verschiedener Phosphate eingesetzt werden.

Phosphorverbindungen der Formel (VII) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestem der Formel (IV), die sich vom Bisphenol A ableiten, ist insbesondere bevorzugt.

Höchst bevorzugt als Komponente E ist Bisphenol-A basierendes Oligophosphat gemäß Formel (VIIa).

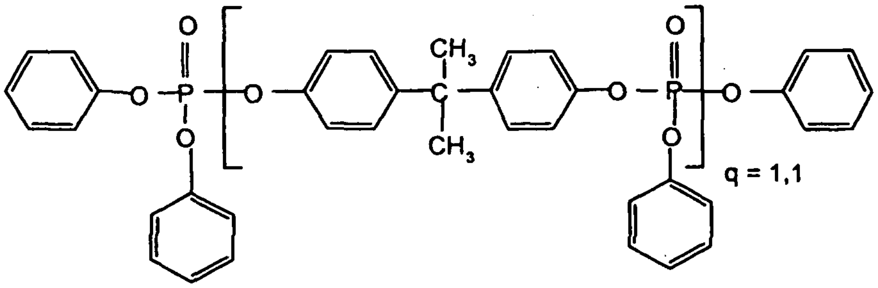

(VIIa)

Die Phosphorverbindungen gemäß Komponente E sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Wenn Mischungen verschiedener Phosphorverbindungen eingesetzt werden und im Fall von oligomeren Phosphorverbindungen, handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Die Flammschutzmittel werden in bevorzugter Ausführungsform in Kombination mit Polytetrafluorethylen (PTFE) als Antidrippingmittel eingesetzt.

**Herstellung der Formmassen**

Die erfindungsgemäßen Formmassen können beispielsweise hergestellt werden, indem man die jeweiligen Bestandteile in bekannter Weise vermischt und bei Temperaturen von 200°C bis 360°C, bevorzugt bei 240 bis 340°C, besonders bevorzugt bei 240 bis 320°C in üblichen Aggregaten wie Innenknetern, Extrudern und Doppelwellenschnecken schmelzcompoundiert und schmelzextrudiert. Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

**Beispiele**

**Komponente A1**

Lineares Polycarbonat auf Basis Bisphenol-A mit einem gewichtsgemittelten Molekulargewicht $\overline{M}_w$ von 28.000 g/mol (bestimmt durch GPC).

**Komponente B-1**

Komponente B.1 wurde hergestellt, indem

(i) aus Butadien in Emulsionspolymerisation (mit 80% Umsatz bezogen auf das eingesetzte Butadien) eine teilchenförmigen Pfropfgrundlage aus Polybutadienkautschuk mit einer mittleren Teilchengröße $d_{50}$ von 0,3 $\mu$m als Pfropfgrundlage Ba-1.2 hergestellt wurde,
(ii) anschließend 60 Gew.-Teile dieser Pfropfgrundlage in einem zweiten Verfahrensschritt in Emulsionspolymerisation mit 40 Gew.-Teile einer Mischung aus den Monomeren Styrol und Acrylnitril (in einem Gewichtsverhältnis von Styrol zu Acrylnitril von 72 : 28) in einer Pfropfreaktion umgesetzt wurden, wobei die Pfropfreaktion in einem pH-Bereich von 8 bis 13 durchgeführt wurde,
(iii) wobei im Verfahrensschritt (i) 0.8 Gew.-Teile (bezogen auf das eingesetzte Butadien) des Dinatriumsalzes der in EP-A 394 779, Beispiel 1 offenbarten Emulgatorsäure (siehe hierzu vereinfachte Formel (VIII))

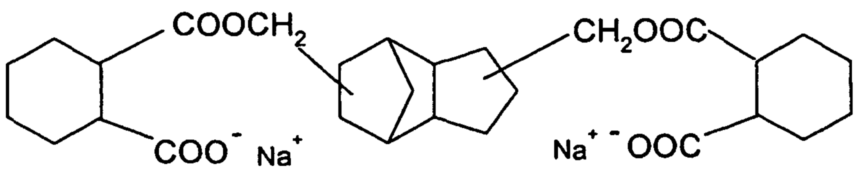
(VIII)

und im Verfahrensschritt (ii) 2,2 Gew.-Teile (bezogen auf die Summe des eingesetzten Acrylnitrils, Styrols und Polybutadienkautschuks, an Resin® 731D der Fa. Abieta GmbH (Gersthofen) (Natrium-Salz der dipsorportionierten Dehydroabietinsäure) als Emulgator zugesetzt wurden,
(iv) anschließend die Fällung des Pfropfpolymerlatex durch Zugabe von Magnesiumsulfat im basischen Milieu, d.h. bei einem pH-Wert >7, erfolgte, das Koagulat abfiltriert und getrocknet wurde,
(v) wobei die Emulgatoren bei der Aufarbeitung des Pfropfpolymerlatex nur partiell aus dem Pfropfpolymerisat entfernt werden.

Die resultierende Komponente B-1 bestand aus

B-1a) ca. 97,2 bis 99,4 Gew.-Teilen, bezogen auf die Summe der Komponenten B-1a) und B-1b), eines in Emulsionspolymerisation hergestellten Pfropfpolymerisats aus

B-a.1 40 Gew.-Teilen (bezogen auf die Summe aus B-1a.1 und B-1a.2) Styrol-Acrylnitril Copolymer mit einem Verhältnis von Styrol zu Acrylnitril von 72 : 28 Gew.-% als Hülle auf
B-1a.2 60 Gew.-Teilen (bezogen auf die Summe aus B-1a.1 und B-1a.2) einer teilchenförmigen Pfropfgrundlage aus Polybutadienkautschuk mit einer mittleren Teilchengröße $d_{50}$ von 0,3 $\mu$m als Kern, und

B-1b) ca. 0,6 bis 2,8 Gew.-Teilen, bezogen auf die Summe der Komponenten B-1a) und B-1b) an Carboxylatsalzen (Na- bzw. Mg-Salze der in den Schritten (i) und (ii) eingesetzten Emulgatorsäuren).

Der pH-Wert einer Dispersion dieser resultierenden Komponente B-1 in destilliertem Wasser (10 Gew.-% B-1 aufgeschlämmt in destilliertem Wasser) lag bei pH = 8 bis 9 (d.h. im basischen Bereich).

**Komponente B-2** (Vergleich)

Pfropfpolymerisat vergleichbar zu B-1, aber unter Verwendung einer Magnesiumsulfat-Essigsäure-Mischung im sauren Milieu gefällt. Der pH-Wert einer Dispersion dieses Pfropfpolymerisats in destilliertem Wasser (10 Gew.-% B-2 aufgeschlämmt in destilliertem Wasser) liegt bei pH 6 bis 7 und damit im leicht sauren Bereich.

**Komponente C**

Phosphorigsäureester des Bis-(2-hydroxy-3-cyclohexyl-5-methyl-phenyl)-methans (Formel IVb).

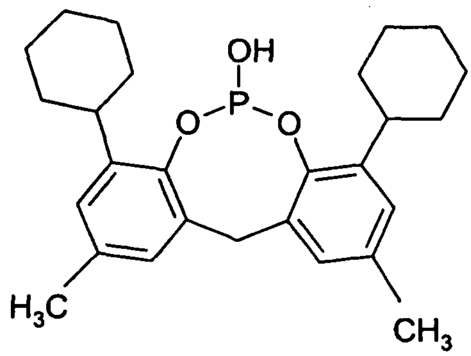

(IVb)

**Komponente D**

Styrol/Arylnitril-Copolymerisat mit einem Styrol/Acrylnitril-Gewichtsverhältnis von 76:24 Gew.-% und einem mittleren Molekulargewicht Mw von 100.000 g/mol (Messung per GPC in Dimethylformamid bei 20°C).

**Komponente E**

E-1: Thermostabilisator, Irganox® 1076, Fa. Ciba Speciality Chemicals
E-2: Thermostabilisator, Irganox® B 900, Fa. Ciba Speciality Chemicals
E-3: Pentaerythrittetrastearat als Gleit-/Entformungsmittel
E-4: Ruß Black Pearls 800, Fa. Cabot

**Herstellung und Prüfung der Formmassen**

Auf einem Zweischneckenextruder (ZSK-25) (Fa. Werner und Pfleiderer) bzw. auf einem 1,3 1-Innenkneter werden die in Tabellen 1-3 aufgeführten Zusammensetzungen bei Temperaturen von 220 bis 270°C compoundiert und nachfolgend granuliert. Die fertigen Granulate werden auf einer Spritzgussmaschine (Fa. Arburg) bei Schmelzetemperaturen von 260°C bzw. 300°C und einer Werkzeugtemperatur von 80°C zu Probekörpern der Abmessung 80 mm x 10 mm x 4 mm verarbeitet.

Zur Charakterisierung der Eigenschaften der Probekörper werden folgende Methoden angewandt:

Die Tieftemperaturzähigkeit wird beurteilt anhand der IZOD-Kerbschlagzähigkeit gemessen gemäß ISO 180-1A bei -20°C an Prüfkörpern, welche bei einer Schmelzetemperatur von 260°C im Spritzguss herstellt wurden.

Als Maß für die Chemikalienbeständigkeit von unter kritischen Verarbeitungsbedingungen spritzgegossenen Bauteilen dient die Spannungsriss-(ESC)-Beständigkeit in Rapsöl bei Raumtemperatur. Bestimmt wird die Zeit bis zum spannungsrissinduzierten Bruchversagen eines bei 300°C Massetemperatur abgespritzten Prüfkörpers der Abmessung 80 mm x 10 mm x 4mm, der mittels einer Spannschablone mit einer externen Randfaserdehnung von 2,4% beaufschlagt und im Medium vollständig eingetaucht wird. Die Messung erfolgt in Anlehnung an ISO 4599.

Als Maß für die Hydrolysebeständigkeit der hergestellten Zusammensetzungen dient die Änderung des bei 260°C mit einer Stempellast von 5 kg nach ISO 1133 gemessenen MVRs bei einer 7-tägigen Lagerung des Granulats bei 95°C und 100% relativer Luftfeuchte. Dabei wird der Anstieg des MVR-Wertes gegenüber dem MVR-Wert vor der entsprechenden Lagerung als ΔMVR(Hydrolyse), welcher sich durch nachstehende Formel definiert, berechnet.

$$\Delta MVR(Hydrolyse) = \frac{MVR(nach\,Lagerung) - MVR(vor\,Lagerung)}{MVR(vor\,Lagerung)} \bullet 100\%$$

Als Maß für die Thermostabilität der hergestellten Zusammensetzungen dient der iMVR gemessen bei 300°C mit einer Stempellast von 5 kg nach ISO 1133 nach einer Vorhaltezeit bei der Messtemperatur von 15 Minuten.

Tabelle 1: Zusammensetzungen und ihre Eigenschaften

| Zusammensetzung. | **1** | **2** | **3** | **4** |
|---|---|---|---|---|
| [Gew.-Teile] | **(Vgl.)** | | | **(Vgl.)** |
| A (Polycarbonat) | 43 | 43 | 43 | 43 |
| B-1 (Pfropf - basisch) | 24 | 24 | 24 | - |
| B-2 (Pfropf - sauer) | - | - | - | 24 |
| C (Phosphorsaure Verbindung) | - | 0,15 | 0,15 | - |
| D (SAN) | 33 | 33 | 33 | 33 |
| E-1 (Antioxidanz) | 0,10 | 0,10 | 0,10 | 0,10 |
| E-2 (neutraler Phosphitstabilisator) | 0,15 | - | - | 0,15 |
| E-3 (PETS) | 0,75 | 0,75 | 0,75 | 0,75 |
| E-4 (Ruß) | - | - | 0,75 | 0,75 |
| | | | | |
| **Eigenschaften** | | | | |
| delta MVR(Hydrolyse) [ml/10min] | 15 | 11 | 10 | 15 |
| iMVR (300°C/5kg/15min) [ml/10min]<br>ak(-20°C) [kJ/m2]<br>ESC (Rapsöl, 2.4%; Zeit bis Bruch) [h] | 130<br>n.g.<br>n.g. | 51<br>n.g.<br>n.g. | 40<br>25<br>2,1 | 47<br>22<br>1,0 |
| n.g. = nicht gemessen | | | | |

Tabelle 2: Zusammensetzungen und ihre Eigenschaften

| Zusammensetzung | 5 | 6 | 7 |
|---|---|---|---|
| [Gew.-Teile] | | **(Vgl.)** | **(Vgl.)** |
| A (Polycarbonat) | 58 | 58 | 58 |
| B-1 (Pfropf - basisch) | 18 | - | - |
| B-2 (Pfropf - sauer) | - | 18 | 18 |
| C (phosphorsaure Verbindung) | 0,12 | - | 0,12 |
| D (SAN) | 24 | 24 | 24 |
| E-1 (Antioxidanz) | 0,10 | 0,10 | 0,10 |
| E-2 (neutraler Phosphitstabilisator) | - | 0,12 | - |
| E-3 (PETS) | 0,75 | 0,75 | 0,75 |
| E-4 (Ruß) | 0,75 | 0,75 | 0,75 |
| | | | |
| **Eigenschaften** | | | |
| delta MVR(Hydrolyse) | 12 | 18 | 30 |
| iMVR (300°C/5kg/15min)<br>ak(-20°C) [kJ/m2] | 52<br>27 | 64<br>24 | n.g.<br>n.g. |

(fortgesetzt)

| **Eigenschaften** | | | |
|---|---|---|---|
| ESC (Rapsöl, 2.4%; Zeit bis Bruch) [h] | 2,3 | 1,0 | n.g. |
| n.g. = nicht gemessen | | | |

Tabelle 3: Zusammensetzungen und ihre Eigenschaften

| Zusammensetzung | **8** | **9** | **10** | **11** |
|---|---|---|---|---|
| [Gew.-Teile] | **(Vgl.)** | | | **(Vgl.)** |
| A (Polycarbonat) | 70 | 70 | 70 | 70 |
| B-1 (Pfropf - basisch) | 14 | 14 | 14 | - |
| B-2 (Pfropf - sauer) | - | - | - | 14 |
| C (phosphorsaure Verbindung) | - | 0,10 | 0,10 | - |
| D (SAN) | 16 | 16 | 16 | 16 |
| E-1 (Antioxidanz) | 0,10 | 0,10 | 0,10 | 0,10 |
| E-2 (neutraler Phosphitstabilisator) | 0,10 | - | - | 0,10 |
| E-3 (PETS) | 0,75 | 0,75 | 0,75 | 0,75 |
| E-4 (Ruß) | - | - | 0,75 | 0,75 |
| | | | | |
| **Eigenschaften** | | | | |
| delta MVR(Hydrolyse) | 5 | 14 | 13 | 17 |
| iMVR (300°C/5kg/15min) | 153 | 67 | 58 | 70 |
| ak(-20°C) (kJ/m2] | n.g. | n.g. | 29 | 25 |
| ESC (Rapsöl, 2.4%; Zeit bis Bruch) [h] | n.g. | n.g. | 2,0 | 1,5 |
| n.g. = nicht gemessen | | | | |

Die Beispiele in den Tabellen 1 bis 3 zeigen, dass solche Polycarbonat-Zusammensetzungen, welche mit im Emulsionsverfahren hergestellten Pfropfpolymerisaten schlagzähmodifiziert sind, überraschend dann eine Kombination aus verbesserter Hydrolyse- und Thermostabilität bei gleichzeitig guter Tieftemperaturzähigkeit und Chemikalienbeständigkeit aufweisen, wenn das Emulsions-Pfropfpolymerisat - entgegen der Lehre des Standes der Technik (siehe beispielsweise EP 900 827 B1) - nicht im sauren, sondern vielmehr im basischen Milieu gefällt und aufgearbeitet wurde, und somit basische Komponenten enhält, sofern die Zusammensetzung mit einer sauren Phosphorverbindung stabilisiert wird (Beispiele 2, 3, 5, 9 und 10).

Zusammensetzungen, bei denen Emulsions-Pfropfpolymerisate zur Schlagzähmodifizierung zum Einsatz kommen, welche im sauren Milieu gefällt wurden und mit neutralem Phosphitstabilisator stabilisiert sind, zeigen gegenüber vergleichbaren erfindungsgemäßen Zusammensetzungen schlechtere Hydrolyse- und Thermostabilität, Chemikalienbeständigkeit und Tieftemperaturzähigkeit (V4, V6 und V11). Werden solche Zusammensetzungen mit EmulsionsPfropfpolymerisaten, welche im sauren Milieu gefällt wurden, zusätzlich mit sauren Phosphorverbindungen stabilisiert, so wird eine drastische weitere Verschlechterung der Hydrolysebeständigkeit beobachtet (V7).

Zusammensetzungen, bei denen das Emulsions-Pfropfpolymerisat im basischen Milieu gefällt wurde und welche mit neutralem Phosphitstabilisator stabilisiert sind, zeigen gegenüber vergleichbaren erfindungsgemäßen Zusammensetzungen erwartungsgemäß eine mangelhafte Thermostabilität (V1 und V8).

## Patentansprüche

1. Zusammensetzung enthaltend

A) aromatisches Polycarbonat oder aromatisches Polyestercarbonat oder Mischungen hieraus,
B) eine Mischung enthaltend

Ba) mindestens ein in Emulsionspolymerisation hergestelltes Pfropfpolymerisat und
Bb) mindestens ein Carboxylatsalz,

wobei diese Mischung als 10 Gew.-%ige Suspension in destilliertem Wasser aufgeschlämmt einen pH-Wert von >7 aufweist,
C) mindestens eine saure Phosphorverbindung mit mindestens einer P-OH-Funktionalität.

**2.** Zusammensetzung gemäß Anspruch 1, enthaltend

A) 10 bis 99,5 Gew.-Teile (bezogen auf die Summe der Komponenten A + B+ D) aromatisches Polycarbonat oder aromatisches Polyestercarbonat oder Mischungen hieraus,
B) 0,5 bis 60 Gew.-Teile (bezogen auf die Summe der Komponenten A + B+ D) einer Mischung enthaltend

Ba) mindestens ein in Emulsionspolymerisation hergestelltes Pfropfpolymerisat und
Bb) mindestens ein Carboxylatsalz,

wobei diese Mischung als 10 Gew.-%ige Suspension in destilliertem Wasser aufgeschlämmt einen pH-Wert von >7 aufweist,
C) 0,001 bis 1 Gew.-Teile (bezogen auf die Summe der Komponenten A + B+ D) mindestens einer sauren Phosphorverbindung mit mindestens einer P-OH-Funktionalität,
D) 0 bis 60 Gew.-Teile (bezogen auf die Summe der Komponenten A + B+ D) eines Polymers ausgewählt aus der Gruppe der Vinyl(co)polymere, Polyester und kautschukmodifizierten Vinyl(co)polymere verschieden von Komponente B,
E) 0 bis 40 Gew.-Teile (bezogen auf die Summe der Komponenten A + B+ D) Polymeradditive,

wobei die Komponenten B und C im Verhältnis 30:1 bis 2000:1 zum Einsatz kommen.

**3.** Zusammensetzung gemäß Anspruch 2, enthaltend

D) 0,5 bis 40 Gew.-Teile (bezogen auf die Summe der Komponenten A + B+ D) eines Polymers ausgewählt aus der Gruppe der Vinyl(co)polymere, Polyester und kautschukmodifizierten Vinyl(co)polymere verschieden von Komponente B,
E) 0,1 bis 30 Gew.-Teile (bezogen auf die Summe der Komponenten A + B+ D) Polymeradditive.

**4.** Zusammensetzung gemäß Anspruch 1 oder 2, wobei das Carboxylatsalz gemäß Komponente Bb) ein Alkalimetall- und/oder Erdalkalimetallsalz einer Carbonsäure mit 10 bis 30 Kohlenstoffatomen ist.

**5.** Zusammensetzung gemäß Anspruch 4, wobei das Carboxylatsalz gemäß Komponente Bb) ein Alkalimetall- und/oder Erdalkalimetallsalz einer Harzsäure oder eines Harzsäurederivats ist.

**6.** Zusammensetzung gemäß Anspruch 1 oder 2, wobei die Komponente B als 10 Gew.-%ige Suspension in destilliertem Wasser aufgeschlämmt einen pH-Wert von 7,5 bis 9aufweist.

**7.** Zusammensetzung gemäß Anspruch 2, enthaltend als Komponente D) in Masse-, Lösungs- oder Suspensionspolymersiation hergestelltes Polymer ausgewählt aus der Gruppe bestehend aus Vinyl(co)polymeren und kautschukmodifizierten Vinyl(co)polymeren.

**8.** Zusammensetzung gemäß Anspruch 2, enthaltend

40 bis 75 Gew.-Teile (bezogen auf die Summe der Komponenten A + B+ D) Komponente A,
3 bis 30 Gew.-Teile (bezogen auf die Summe der Komponenten A + B+ D) Komponente B,
0,005 bis 0,3 Gew.-Teile (bezogen auf die Summe der Komponenten A + B+ D) Komponente C,
5 bis 40 Gew.-Teile (bezogen auf die Summe der Komponenten A + B+ D) Komponente D,
0,5 bis 20 Gew.-Teile (bezogen auf die Summe der Komponenten A + B+ D) Komponente E.

**9.** Zusammensetzung gemäß Anspruch 8, wobei die Komponenten B und C im Verhältnis 80:1 bis 800:1 zum Einsatz kommen.

**10.** Zusammensetzung gemäß Anspruch 1 oder 2, wobei die Komponente B erhältlich ist nach einem Verfahren,

(i) wobei in einem ersten Verfahrensschritt in Emulsionspolymerisation eine Pfropfgrundlage Ba.2 hergestellt wird,
(ii) diese in einem zweiten Verfahrensschritt in Emulsionspolymerisation mit wenigstens einem Vinylmonomeren Ba.1 in einer Pfropfreaktion umgesetzt wird, wobei die Pfropfreaktion bei einem pH-Wert von >7 durchgeführt wird, wobei gegebenenfalls Additive wie beispielsweise Stabilisatoren und Antioxidantien, bevorzugt als wässrige Emulsion oder Dispersion zugegeben werden,
(iii) wobei in mindestens einem der Verfahrensschritte (i) bis (ii) ein Carboxylatsalz Bb) als Emulgator eingesetzt wird, gegebenenfalls in Kombination mit weiteren, von Carboxylatsalzen Bb) verschiedenen oberflächenaktiven Substanzen,
(iv) wobei die Fällung des Pfropfpolymerlatex entweder im basischen Milieu, d.h. bei einem pH-Wert >7, oder aber unter solchen, gegebenenfalls auch leicht sauren Bedingungen durchgeführt wird, die zu keiner vollständigen Neutralisation bereits vorhandener basischer Komponenten führen, und
(v) wobei das als Emulgator eingesetzte Carboxylatsalz bei der anschließenden Aufarbeitung des Pfropfpolymerlatex im Pfropfpolymerisat verbleibt oder aber nur partiell aus dem Pfropfpolymerisat entfernt wird..

**11.** Zusammensetzung gemäß Anspruch 1 oder 2, wobei Komponente C) ausgewählt ist aus mindestens einer Verbindung der Gruppe bestehend aus
ortho-Phosphorsäure,
meta-Phosphorsäure,
Oligophosphorsäure,
phosphorige Säure,
$P(O)(OH)(OR^7)(OR^8)$,
$P(O)(OH)R^7(OR^8)$,
$P(O)(OH)R^7R^8$,
$P(O)(OH)_2(OR^7)$,
$P(O)(OH)_2R^7$,
$P(OH)(OR^7)(OR^8)$,
$P(OH)(OR^7)R^8$,
$P(OH)R^7R^8$,
$P(OH)_2(OR^7)$, und
$P(OH)_2R^7$
sowie Kondensationsprodukte artgleicher oder artverschiedener dieser Verbindungen, w
obei $R^7$ und $R^8$ für beliebige gleiche oder verschiedene organische Reste stehen, wobei die Reste $R^7$ und $R^8$ auch zu einem zyklischen Rest verbunden sein können.

**12.** Zusammensetzung gemäß Anspruch 1 oder2, wobei Komponente C) eine Verbindung gemäß Formel (IV) ist,

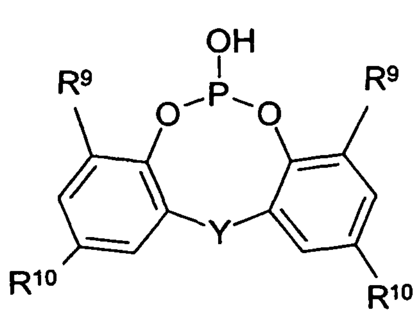

(IV)

worin

$R^9$ und $R^{10}$ unabhängig voneinander $C_1$ bis $C_9$-Alkyl, gegebenenfalls substituiertes $C_5$ bis $C_6$-Cycloalkyl, $C_6$ bis $C_{10}$-Aryl oder $C_7$ bis $C_{12}$-Aralkyl, und
Y S oder $CZ^1Z^2$, wobei $Z^1$ und $Z^2$ unabhängig voneinander für H, $C_1$ bis $C_6$-Alkyl, Cyclohexenyl oder Cyclohexyl

stehen,

bedeuten.

**13.** Zusammensetzung gemäß Anspruch 1 oder 2, wobei Komponente C) ausgewählt ist aus mindestens einer Verbindung der Gruppe bestehend aus
Verbindungen der Strukturen (V)

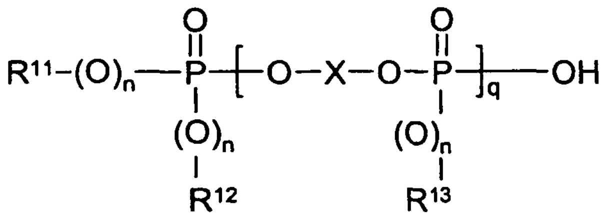

(V)

und Verbindungen der Strukturen (VI),

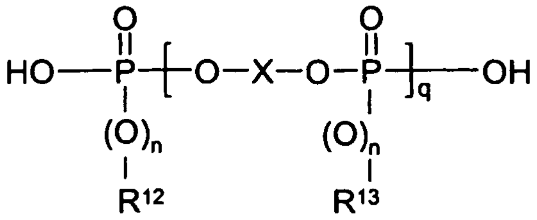

(VI)

worin

$R^{11}$, $R^{12}$ und $R^{13}$ unabhängig voneinander jeweils gegebenenfalls halogeniertes $C_1$ bis $C_8$-Alkyl, jeweils gegebenenfalls durch Alkyl und/oder Halogen substituiertes $C_5$ bis $C_6$-Cycloalkyl, $C_6$ bis $C_{20}$-Aryl oder $C_7$ bis $C_{12}$-Aralkyl,
n unabhängig voneinander 0 oder 1,
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann,

bedeuten.

**14.** Formkörper, enthaltend eine Zusammensetzung nach einem der Ansprüche 1 bis 13.

**15.** Formkörper nach Anspruch 14, **dadurch gekennzeichnet, dass** der Formkörper ein Teil eines Kraftfahrzeugs, Schienenfahrzeugs, Luftfahrzeugs oder Wasserfahrzeugs oder eine Folie, ein Profil oder ein Gehäuseteil ist.

**Claims**

**1.** Composition comprising

A) aromatic polycarbonate or aromatic polyester carbonate or a mixture thereof,
B) a mixture comprising

Ba) at least one graft polymer produced by emulsion polymerization and
Bb) at least one carboxylate salt,

where the pH of this mixture slurried to give a 10% by weight suspension in distilled water is greater than 7,
C) at least one acidic phosphorus compound having at least one P-OH functionality.

2. Composition according to Claim 1, comprising

A) 10 to 99.5 parts by weight (based on the entirety of components A + B + D) of aromatic polycarbonate or aromatic polyester carbonate or a mixture thereof,
B) 0.5 to 60 parts by weight (based on the entirety of components A + B + D) of a mixture comprising

Ba) at least one graft polymer produced by emulsion polymerization and
Bb) at least one carboxylate salt,

where the pH of this mixture slurried to give a 10% by weight suspension in distilled water is greater than 7,
C) from 0.001 to 1 part by weight (based on the entirety of components A + B + D) of at least one acidic phosphorus compound having at least one P-OH functionality,
D) from 0 to 60 parts by weight (based on the entirety of components A + B + D) of a polymer selected from the group of the vinyl (co)polymers, polyesters and rubber-modified vinyl (co)polymers differing from component B,
E) from 0 to 40 parts by weight (based on the entirety of components A + B + D) of polymer additives,

where components B and C are used in a ratio of from 30:1 to 2000:1.

3. Composition according to Claim 2, comprising D) from 0.5 to 40 parts by weight (based on the entirety of components A + B + D) of a polymer selected from the group of the vinyl (co)polymers, polyesters and rubber-modified vinyl (co) polymers differing from component B, E) from 0.1 to 30 parts by weight (based on the entirety of components A + B + D) of polymer additives.

4. Composition according to Claim 1 or 2, where the carboxylate salt according to component Bb) is an alkali metal and/or alkaline earth metal salt of a carboxylic acid having from 10 to 30 carbon atoms.

5. Composition according to Claim 4, where the carboxylate salt according to component Bb) is an alkali metal and/or alkaline earth metal salt of a resin acid or of a resin acid derivative.

6. Composition according to Claim 1 or 2, where the pH of component B slurried to give a 10% by weight suspension in distilled water is from 7.5 to 9.

7. Composition according to Claim 2, comprising, as component D), polymer produced by bulk, solution or suspension polymerization selected from the group consisting of vinyl (co)polymers and rubber-modified vinyl (co)polymers.

8. Composition according to Claim 2, comprising from 40 to 75 parts by weight (based on the entirety of components A + B + D) of component A, from 3 to 30 parts by weight (based on the entirety of components A + B + D) of component B, from 0.005 to 0.3 parts by weight (based on the entirety of components A + B + D) of component C, from 5 to 40 parts by weight (based on the entirety of components A + B + D) of component D, from 0.5 to 20 parts by weight (based on the entirety of components A + B + D) of component E.

9. Composition according to Claim 8, where components B and C are used in a ratio of from 80:1 to 800:1.

10. Composition according to Claim 1 or 2, where component B is obtainable by a process

(i) where, in a first step, a graft base Ba.2 is produced by emulsion polymerization,
(ii) this is reacted, in a second step, by emulsion polymerization with at least one vinyl monomer Ba.1 in a graft reaction, where the graft reaction is carried out at pH >7, where additives such as stabilizers and antioxidants, preferably in the form of aqueous emulsion or dispersion, are optionally added,
(iii)where in at least one of steps (i) to (ii) a carboxylate salt Bb) is used as emulsifier, optionally in combination with other surfactant substances different from carboxylate salts Bb),
(iv) where the precipitation of the graft polymer latex is carried out either in the basic medium, i.e. at pH >7, or is carried out under conditions which optionally may also be slightly acidic but which are such that they do not lead to complete neutralization of any basic components already present, and
(v) where, during the following work-up of the graft polymer latex, the carboxylate salt used as emulsifier remains in the graft polymer or is only partially-removed from the graft polymer.

**11.** Composition according to Claim 1 or 2, where component C) has been selected from at least one compound of the group consisting of
ortho-phosphoric acid,
meta-phosphoric acid,
oligophosphoric acid,
phosphorous acid,
$P(O)(OH)(OR^7)(OR^8)$ ,
$P(O)(OH)R^7(OR^8)$ ,
$P(O)(OH)R^7R^8$,
$P(O(OH)_2(OR^7)$ ,
$P(O)(OH)_2R^7$,
$P(OH)(OR^7)(OR^8)$ ,
$P(OH)(OR^7)R^8$,
$P(OH)R^7R^8$,
$P(OH)_2(OR^7)$ , and
$P(OH)_2R^7$
and condensation products of the same species or different species of these compounds, where $R^7$ and $R^8$ are any desired identical or different organic moieties, where there can also be bonding between the moieties $R^7$ and $R^8$ to give a cyclic moiety.

**12.** Composition according to Claim 1 or 2, where component C) is a compound according to formula (IV),

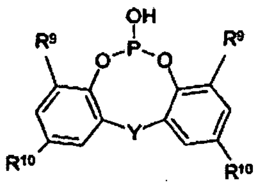

(IV)

in which

$R^9$ and $R^{10}$ are mutually independently $C_1$ to $C_9$-alkyl, optionally substituted $C_5$ to $C_6$-cycloalkyl, $C_6$ to $C_{10}$-aryl or $C_7$ to $C_{12}$-aralkyl, and
Y is S or $CZ^1Z^2$, where $Z^1$ and $Z^2$ are mutually independently H, $C_1$ to $C_6$-alkyl, cyclohexenyl or cyclohexyl.

**13.** Composition according to Claim 1 or 2, where component C) has been selected from at least one compound of the group consisting of
compounds of the structures (V)

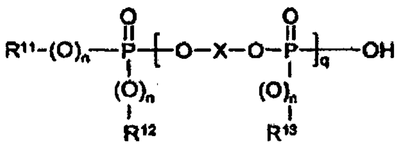

(V)

and compounds of the structures (VI),

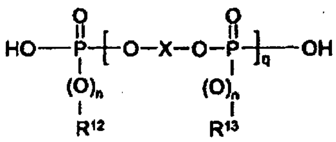

(VI)

in which

$R^{11}$, $R^{12}$ and $R^{13}$ are mutually independently respectively optionally halogenated $C_1$ to $C_8$-alkyl, respectively optionally alkyl- and/or halogen-substituted $C_5$ to $C_6$-cycloalkyl, $C_6$ to $C_{20}$-aryl or $C_7$ to $C_{12}$-aralkyl,
n is mutually independently 0 or 1,
q is from 0 to 30 and
X is a mono- or polynuclear aromatic moiety having from 6 to 30 carbon atoms, or a linear or branched aliphatic moiety which has from 2 to 30 carbon atoms and which can have OH-substitution and which can comprise up to 8 ether bonds.

**14.** Moulding, comprising a composition according to any of Claims 1 to 13.

**15.** Moulding according to Claim 14, **characterized in that** the moulding is a part of a motor vehicle, of a rail vehicle, or of an aircraft or watercraft, or is a foil, a profile or a housing part.

## Revendications

**1.** Composition contenant :

A) un polycarbonate aromatique ou un polyestercarbonate aromatique ou leurs mélanges,
B) un mélange contenant :

Ba) au moins un polymère greffé fabriqué par polymérisation en émulsion et
Bb) au moins un sel de carboxylate,

ce mélange suspendu sous la forme d'une suspension à 10 % en poids dans de l'eau distillée présentant un pH > 7,
C) au moins un composé de phosphore acide comprenant au moins une fonctionnalité P-OH.

**2.** Composition selon la revendication 1, contenant :

A) 10 à 99,5 parties en poids (par rapport à la somme des composants A + B + D) d'un polycarbonate aromatique ou d'un polyester-carbonate aromatique ou de leurs mélanges,
B) 0,5 à 60 parties en poids (par rapport à la somme des composants A + B + D) d'un mélange contenant :

Ba) au moins un polymère greffé fabriqué par polymérisation en émulsion et
Bb) au moins un sel de carboxylate,

ce mélange suspendu sous la forme d'une suspension à 10 % en poids dans de l'eau distillée présentant un pH > 7,
C) 0,001 à 1 partie en poids (par rapport à la somme des composants A + B + D) d'au moins un composé de phosphore acide comprenant au moins une fonctionnalité P-OH,
D) 0 à 60 parties en poids (par rapport à la somme des composants A + B + D) d'un polymère choisi dans le groupe des (co)polymères de vinyle, des polyesters et des (co)polymères de vinyle modifiés par du caoutchouc différents du composant B,
E) 0 à 40 parties en poids (par rapport à la somme des composants A + B + D) d'additifs polymères,

les composants B et C étant utilisés en un rapport de 30:1 à 2 000:1.

**3.** Composition selon la revendication 2, contenant :

D) 0,5 à 40 parties en poids (par rapport à la somme des composants A + B + D) d'un polymère choisi dans le groupe des (co)polymères de vinyle, des polyesters et des (co)polymères de vinyle modifiés par du caoutchouc différents du composant B,
E) 0,1 à 30 parties en poids (par rapport à la somme des composants A + B + D) d'additifs polymères.

**4.** Composition selon la revendication 1 ou 2, dans laquelle le sel de carboxylate selon le composant Bb) est un sel de métal alcalin et/ou de métal alcalinoterreux d'un acide carboxylique contenant 10 à 30 atomes de carbone.

5. Composition selon la revendication 4, dans laquelle le sel de carboxylate selon le composant Bb) est un sel de métal alcalin et/ou de métal alcalinoterreux d'un acide résinique ou d'un dérivé d'acide résinique.

6. Composition selon la revendication 1 ou 2, dans laquelle le composant B suspendu sous la forme d'une suspension à 10 % en poids dans de l'eau distillée présente un pH de 7,5 à 9.

7. Composition selon la revendication 2, contenant en tant que composant D) un polymère fabriqué par polymérisation en masse, en solution ou en suspension, choisi dans le groupe constitué par les (co)polymères de vinyle et les (co) polymères de vinyle modifiés par du caoutchouc.

8. Composition selon la revendication 2, contenant :

   40 à 75 parties en poids (par rapport à la somme des composants A + B + D) du composant A,
   3 à 30 parties en poids (par rapport à la somme des composants A + B + D) du composant B,
   0,005 à 0,3 partie en poids (par rapport à la somme des composants A + B + D) du composant C,
   5 à 40 parties en poids (par rapport à la somme des composants A + B + D) du composant D,
   0,5 à 20 parties en poids (par rapport à la somme des composants A + B + D) du composant E.

9. Composition selon la revendication 8, dans laquelle les composants B et C sont utilisés en un rapport de 80:1 à 800:1.

10. Composition selon la revendication 1 ou 2, dans laquelle le composant B peut être obtenu par un procédé selon lequel,

   (i) lors d'une première étape de procédé, une base de greffage Ba.2 est fabriquée par polymérisation en émulsion,
   (ii) celle-ci est mise en réaction par une réaction de greffage lors d'une seconde étape de procédé par polymérisation en émulsion avec au moins un monomère de vinyle Ba.1,
   la réaction de greffage étant réalisée à un pH > 7, des additifs tels que par exemple des stabilisateurs et des antioxydants, de préférence sous la forme d'une émulsion ou dispersion aqueuse, étant éventuellement ajoutés,
   (iii) un sel de carboxylate Bb) étant utilisé en tant qu'émulsifiant dans au moins une des étapes de procédé (i) à (ii), éventuellement en combinaison avec d'autres substances tensioactives différentes des sels de carboxylate Bb),
   (iv) la précipitation du latex de polymère greffé étant réalisée dans le milieu basique, c.-à-d. à un pH > 7, ou dans des conditions, éventuellement également légèrement acides, ne conduisant pas à une neutralisation complète des composants basiques déjà présents, et
   (v) le sel de carboxylate utilisé en tant qu'émulsifiant restant dans le polymère greffé ou n'étant éliminé que partiellement du polymère greffé lors du traitement ultérieur du latex de polymère greffé.

11. Composition selon la revendication 1 ou 2, dans laquelle le composant C) est choisi parmi au moins un composé du groupe constitué par
   l'acide ortho-phosphorique,
   l'acide méta-phosphorique,
   l'acide oligophosphorique,
   l'acide phosphoreux,
   $P(O)(OH)(OR^7)(OR^8)$,
   $P(O)(OH)R^7(OR^8)$,
   $P(O)(OH)R^7R^8$,
   $P(O)(OH)_2(OR^7)$,
   $P(O)(OH)_2R^7$,
   $P(OH)(OR^7)(OR^8)$,
   $P(OH)(OR^7)R^8$,
   $P(OH)R^7R^8$,
   $P(OH)_2(OR^7)$ et
   $P(OH)_2R^7$,
   ainsi que les produits de condensation de même nature ou de nature différente de ces composés,
   $R^7$ et $R^8$ représentant des radicaux organiques identiques ou différents quelconques, les radicaux $R^7$ et $R^8$ pouvant également être reliés en un radical cyclique.

12. Composition selon la revendication 1 ou 2, dans laquelle le composant C) est un composé de formule (IV)

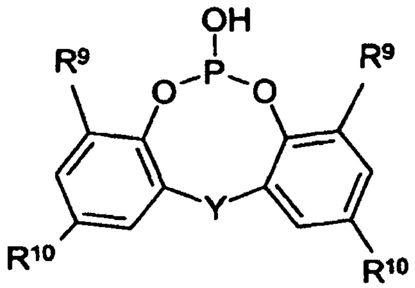

(IV)

dans laquelle
$R^9$ et $R^{10}$ signifient indépendamment l'un de l'autre alkyle en $C_1$ à $C_9$, cycloalkyle en $C_5$ à $C_6$ éventuellement substitué, aryle en $C_6$ à $C_{10}$ ou aralkyle en $C_7$ à $C_{12}$, et Y signifie S ou $CZ^1Z^2$, $Z^1$ et $Z^2$ représentant indépendamment l'un de l'autre H, alkyle en $C_1$ à $C_6$, cyclohexényle ou cyclohexyle.

**13.** Composition selon la revendication 1 ou 2, dans laquelle le composant C) est choisi parmi au moins un composé du groupe constitué par
les composés de structure (V)

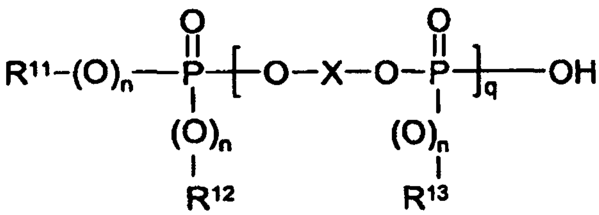

(V)

et les composés de structure (VI)

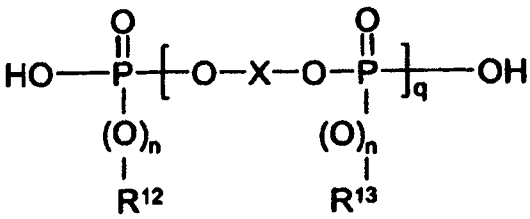

(VI)

dans lesquelles
$R^{11}$, $R^{12}$ et $R^{13}$ signifient indépendamment les uns des autres alkyle en $C_1$ à $C_8$ à chaque fois éventuellement halogéné, cycloalkyle en $C_5$ à $C_6$ à chaque fois éventuellement substitué par alkyle et/ou halogène, aryle en $C_6$ à $C_{20}$ ou aralkyle en $C_7$ à $C_{12}$,
les n signifient indépendamment les uns des autres 0 ou 1,
q signifie 0 à 30, et
X signifie un radical aromatique mono- ou polynucléaire contenant 6 à 30 atomes C, ou un radical aliphatique linéaire ou ramifié contenant 2 à 30 atomes C, qui peut être substitué par OH et contenir jusqu'à 8 liaisons éther.

**14.** Corps moulé, contenant une composition selon l'une quelconque des revendications 1 à 13.

**15.** Corps moulé selon la revendication 14, **caractérisé en ce que** le corps moulé est une partie d'un véhicule automobile, d'un véhicule ferroviaire, d'un aéronef ou d'un bateau, ou une feuille, un profilé ou une partie de boîtier.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 900827 A
- EP 576950 A
- WO 2007065579 A
- DE S1495626 A
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- DE OS3704657 A
- DE OS3704655 A
- DE OS3631540 A
- DE OS3631539 A
- US 4937285 P
- EP 867463 A
- EP 0023291 A
- DE 2407674 A
- DE 2407776 A
- DE 2715932 A
- DE 1900270 A
- US PS3692744 A
- EP 0363608 A
- EP 0640655 A
- WO 0000541 A
- WO 0118105 A
- EP 394779 A
- EP 900827 B1


### In der Beschreibung aufgeführte Nicht-Patentliteratur


- **SCHNELL.** Chemistry and Physics of Polycarbonates. Interscience Publishers, 1964
- **M. HOFFMANN ; H. KRÖMER ; R. KUHN.** Polymeranalytik I und II. Georg Thieme-Verlag, 1977
- **W. SCHOLTAN ; H. LANGE.** *Kolloid, Z. und Z. Polymere,* 1972, vol. 250, 782-1796
- Kunststoff-Handbuch. Carl-Hanser-Verlag, 1973, vol. VIII, 695 ff
- Ullmanns Enzyklopädie der technischen Chemie. 1979, vol. 18, 301 ff
- **HOUBEN-WEYL.** *Methoden der organischen Chemie,* vol. 12 (1), 43
- *METHODEN DER ORGANISCHEN CHEMIE,* vol. 6, 177